# FASCICULE DE BREVET EUROPEEN

(11) **EP 1 014 129 B1**
(45) Date de publication et mention de la délivrance du brevet: **01.10.2008**
(21) Numéro de dépôt: 99403264.7
(22) Date de dépôt: 23.12.1999
(51) Int. Cl.: G02B 6/38

(54) **Connecteur pour fibre optique avec une encoche pour l'injection de colle**
Stecker für optische Faser mit einer Aussparung zum Einspritzen von Klebstoff
Optical fibre connector with a recess for injecting an adhesive

(30) Priorité: 24.12.1998 FR 9816450
(43) Date de publication de la demande: 28.06.2000
(73) Titulaire: RADIALL, 93116 Rosny-Sous-Bois (FR)
(72) Inventeur: Dubois, Serge, 38940 Roybon (FR); Grassin d'Alphonse, Emmanuel, 69003 Lyon (FR)
(74) Mandataire: Leszczynski, André

(56) Documents cités:
- EP-A- 0 413 844
- WO-A-96/37792
- WO-A-97/19378
- DE-A- 19 533 498

## Description

La présente invention concerne un élément de connecteur pour fibre optique.

La demande DE 19533498 décrit un connecteur pour fibre optique comportant une partie avant agencée pour recevoir un module de support de la fibre optique.

La demande WO 96/37792 décrit un dispositif pour fibre optique comportant un corps avec une portion cylindrique arrière.

Dans la présente invention, on désigne par « ferrule », selon le terme utilisé par les spécialistes du domaine, un fourreau cylindrique comportant un canal central destiné à recevoir la portion d'extrémité dénudée d'une fibre optique pour la maintenir précisément dans l'alignement d'une autre fibre optique maintenue par la ferrule d'un autre élément de connecteur.

On sait que la mise en place d'éléments de connecteur à l'extrémité de fibres optiques nécessite des manipulations délicates et souvent longues, dont la bonne exécution conditionne la qualité de la transmission optique entre les fibres ainsi raccordées.

Parmi les opérations requises, il en existe une qui demande un soin particulier du fait qu'elle peut non seulement dégrader la qualité de la connexion optique, mais également endommager le connecteur. Il s'agit du collage de la fibre optique dénudée dans la ferrule du connecteur.

En effet, pour réaliser cette opération, on introduit une seringue dans le connecteur, par son extrémité arrière, jusqu'à l'embouchure du canal central de la ferrule, pour y déposer une goutte de colle.

Une fois la goutte de colle déposée, il faut extraire la seringue de l'élément de connecteur sans souiller l'intérieur dudit élément, alors qu'une bulle de colle fait saillie à l'extrémité de la seringue.

La difficulté consiste à retirer la seringue en la maintenant précisément dans l'axe de l'élément de connecteur, de manière à ne toucher aucune partie de l'élément de connecteur.

Or, les quelques millimètres de diamètre de l'orifice par lequel la seringue est introduite puis retirée rendent pratiquement impossible le retrait manuel de la seringue sans toucher les parois dudit orifice. Automatiser cette opération ce qui ne se justifierait que pour de grosses quantités de câblage en usine mais ne résoudrait pas le problème du câblage sur le site d'exploitation de la fibre, câblage pour lequel un outillage spécifique est nécessaire.

La présente invention vise notamment à fournir une solution à ce problème particulier de l'extraction de la seringue sans souiller l'intérieur de l'élément de connecteur.

La présente invention a pour objet un élément de connecteur pour fibre optique, tel qu'il est défini dans la revendication 1, ainsi qu'un procédé tel que défini dans la revendication 15.

L'encoche prévue dans la paroi de l'extrémité arrière du corps permet à la seringue de s'échapper du support de ferrule directement à l'extérieur de l'élément de connecteur, sans toucher aucune autre pièce dudit élément de connecteur. -.

Ainsi, la seringue est guidée tout au long de son trajet de sortie dans le support de ferrule, lequel peut entrer en contact avec la goutte de colle en saillie de la seringue sans que cela n'entraîne de conséquence néfaste étant donné que la fibre optique gainée est destinée à se coller à l'intérieur du support de ferrule. Dès sa sortie du support de ferrule, la seringue quitte l'élément de connecteur sans souiller l'extrémité arrière de son corps.

Dans le but de faciliter l'échappement de la seringue, on prévoit que l'encoche soit plus large que l'extrémité arrière du support de ferrule.

Dans un mode de réalisation préféré de l'invention, l'encoche présente sensiblement la forme d'un U dont l'axe médian est parallèle à l'axe longitudinal du support de ferrule.

Avantageusement, le support de ferrule est une pièce sensiblement cylindrique de révolution, comme cela est connu, et le corps est une pièce intérieurement de révolution coaxiale au support de ferrule.

Afin de faciliter davantage l'échappement de la seringue à la sortie du corps de l'élément de connecteur, chaque branche du U de l'encoche est de préférence découpée dans l'épaisseur de la paroi du corps suivant un plan, les deux plans correspondant chacun à une branche du U formant entre eux un angle d'environ 20 degrés et offrant un angle d'ouverture à partir de l'axe du corps d'environ 40 degrés.

Dans un mode de réalisation particulier de l'invention, l'élément de connecteur comporte en outre une structure de renfort de l'extrémité arrière du corps, sous la forme d'une pièce conformée pour s'emmancher dans ledit corps par son extrémité arrière de manière à soutenir la paroi dudit corps autour de l'encoche.

Cette structure de renfort soutient la paroi du corps à son extrémité arrière, là où elle est fragilisée par la présence de l'encoche.

L'agencement selon l'invention de la portion cylindrique de la partie arrière du corps de l'élément de connecteur et du manchon de sertissage qui l'entoure constitue des moyens d'arrimage pour arrimer les éléments de renfort d'un câble optique incluant la fibre optique au corps de l'élément de connecteur de manière à soustraire la ferrule et son support à toute traction exercée sur le câble optique.

Dans une variante préférée, les moyens d'arrimage arriment aussi la gaine extérieure du câble optique au corps de l'élément de connecteur de manière à soustraire la ferrule et son support à toute traction exercée sur le câble optique.

Dans une version préférée de ce mode de réalisation, les moyens d'arrimage comprennent en outre une enclume, l'enclume étant une pièce de révolution engagée sous la paroi du corps de l'élément de connecteur et autour de la fibre optique dénudée, le manchon de sertissage subissant une déformation plastique par écrasement, en emprisonnant les éléments de renfort contre la paroi du corps soutenue par l'enclume.

Dans un mode de réalisation particulier, la structure de renfort et l'enclume sont une seule et même pièce.

Dans ce mode de réalisation, il peut être avantageux que l'enclume prolonge la paroi extérieure du corps de l'élément de connecteur vers l'arrière, ce qui augmente la longueur sur laquelle les éléments de renfort sont sertis, sans pour autant allonger l'élément de connecteur.

De plus, l'enclume peut comporter un tronçon arrière de plus petit diamètre, prévu pour s'engager sous la gaine du câble, le manchon de sertissage présentant intérieurement un rétrécissement de diamètre correspondant, de sorte que lors du sertissage des éléments de renfort, la gaine du câble soit simultanément solidarisée à l'enclume.

Dans un mode de réalisation particulier de l'invention, un manchon élastiquement flexible de soutien de câble est prévu à l'arrière de l'élément de connecteur pour guider le câble optique en l'empêchant de se plier à sa sortie de l'élément de connecteur.

Dans une variante de ce mode de réalisation, le manchon de soutien de câble est engagé autour du manchon de sertissage et le manchon de sertissage s'étend vers l'arrière de l'élément de connecteur au-delà de l'enclume où il comporte une embouchure évasée offrant un débattement radial au câble optique, de façon que le manchon de soutien de câble, lorsqu'il subit une flexion et désaxe le câble optique par rapport à l'élément de connecteur, s'appuie sur le manchon de sertissage, et que la distance entre l'extrémité arrière de l'enclume et l'extrémité arrière du manchon de sertissage permette au câble optique, dont l'axe est confondu avec celui de l'élément de connecteur à la sortie arrière de l'enclume, de se courber progressivement pour se retrouver dans l'axe du manchon de soutien de câble à la sortie du manchon de sertissage.

D'une manière plus générale, le manchon de sertissage, dans sa partie arrière, joue le rôle d'écarteur, en maintenant le manchon de soutien à distance du câble lorsque ledit manchon se déforme, de façon à conserver un jeu radial et axial autour du câble pour lui permettre de se désaxer sans être cisaillé.

En d'autres termes, le manchon de soutien du câble prend appui, à l'arrière de l'élément de connecteur, sur un écarteur cylindrique à embouchure évasée, qui s'étend en arrière de l'élément de connecteur autour et au-delà de tout moyen d'arrimage du câble.

De préférence, l'extrémité du manchon de soutien de câble opposée au corps de l'élément de connecteur comporte une embouchure évasée permettant au câble optique sortant dudit manchon de sortie de prendre une courbure compatible avec le rayon de courbure minimal de la fibre optique.

Dans le but de mieux faire comprendre l'invention, on va en décrire maintenant des modes de réalisation donnés à titre d'exemples non limitatifs, en référence au dessin annexé dans lequel :
- la figure 1 est une vue en perspective éclatée d'un élément de connecteur de type SC,
- la figure 2 est une vue en coupe axiale selon II-II de l'élément de connecteur de la figure 1 une fois assemblé,
- la figure 3 est une vue de droite de la figure 2,
- la figure 4 est une vue de dessus de la figure 2,
- la figure 5 est une vue en perspective éclatée d'un élément de connecteur de type FC,
- la figure 6 est une vue en coupe axiale selon VI-VI de l'élément de connecteur de la figure 5, sans son bouchon de vissage,
- la figure 7 est une vue en coupe axiale selon VII-VII de la figure 6, avec le bouchon de vissage,
- la figure 8 est une vue en coupe axiale d'un manchon de guidage de câble monté sur un élément de connecteur de type SC.

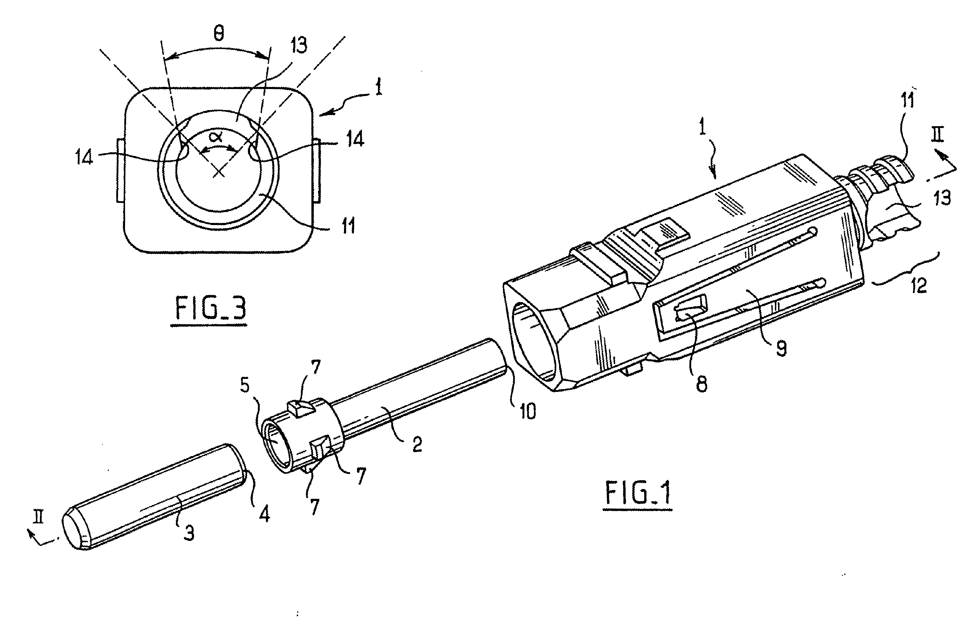

L'élément de connecteur représenté sur les figures 1 à 4 est prévu pour se connecter à un autre élément de connecteur complémentaire (non représenté).

Il comprend un boîtier ou corps 1, un support de ferrule 2 et une ferrule 3, laquelle est emmanchée par une de ses extrémités 4 dans un logement d'extrémité 5 du support de ferrule.

Les détails de la forme extérieure du corps 1 ne seront pas décrits ici.

Dans la suite de la description des figures 1 à 4, on appellera extrémité arrière de chaque pièce son extrémité dirigée vers la droite et extrémité avant son extrémité dirigée vers la gauche.

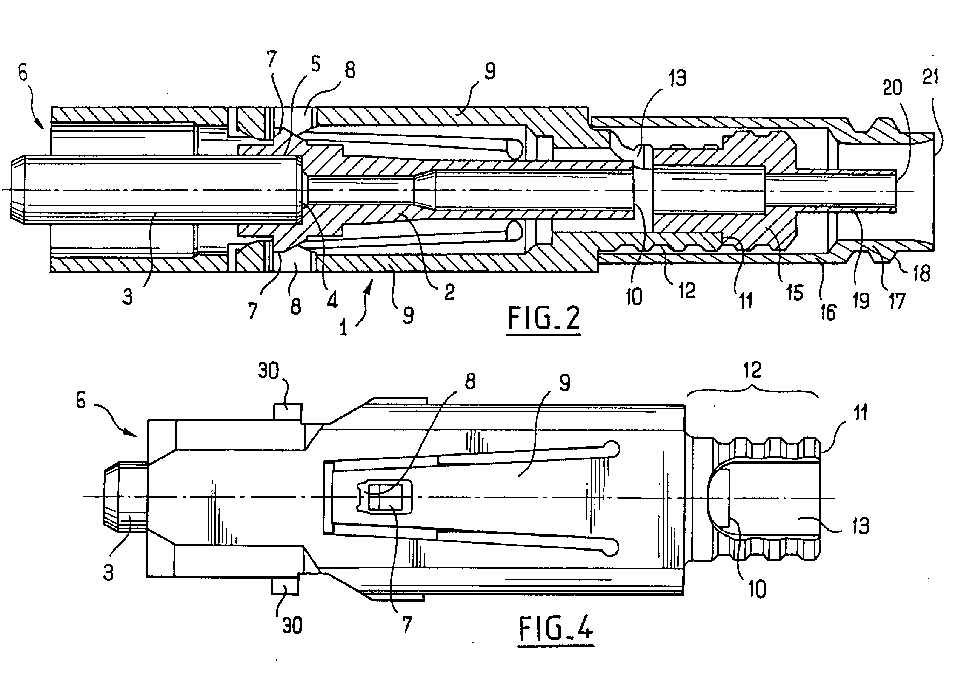

Comme on le voit sur la vue en coupe de la figure 2, la ferrule 3 et le support de ferrule 2 s'engagent d'un seul tenant dans le corps 1 par l'extrémité avant 6 de ce dernier, jusqu'à ce que des ergots de rétention 7 du support 2 s'encliquettent dans des évidements 8 prévus à cet effet dans des bras élastiques de rétention 9 découpés dans la paroi du corps 1.

Un canal s'étend axialement dans le support pour permettre à une fibre optique de le traverser pour atteindre la ferrule.

Lorsque le support de ferrule 2 est en position dans le corps 1, son extrémité arrière 10, opposée à la ferrule, s'étend jusqu'au voisinage de l'extrémité arrière 11 du corps mais sans dépasser au-delà de cette extrémité.

En d'autres termes, le support de ferrule 2 est intégralement contenu dans le corps 1.

Ce dernier comporte dans sa partie arrière une portion cylindrique crénelée 12.

Comme on le voit sur la vue de dessus de la figure 4, cette portion cylindrique 12 comporte, découpée dans son épaisseur, une encoche en forme de U 13 qui s'étend depuis l'extrémité arrière 11 du corps sur une longueur suffisante pour dégager un accès radial à l'extrémité arrière 10 du support 2.

La largeur de l'encoche 13 est supérieure à celle du canal intérieur du support 2.

La figure 3 permet de voir que les branches du U ou bords 14 de l'encoche forment entre eux un angle θ d'environ 20 degrés et ouvrent un angle α à partir de l'axe du corps d'environ 40 degrés, ce qui offre un espace de sortie latérale relativement grand.

Un tel angle d'ouverture permet à un opérateur tenant une seringue (non représentée) engagée dans le support de ferrule de sortir cette seringue de l'élément de connecteur sans toucher le corps. -

La manoeuvre de l'opérateur consiste à sortir la seringue en la maintenant en appui contre la paroi intérieure du support 2, en direction de l'encoche 13.

Ainsi, lorsque l'extrémité de la seringue arrive à l'embouchure 10 du support 2, elle s'en échappe et sort immédiatement du corps en traversant l'encoche 13 sans toucher la paroi du corps.

Le risque de souillure de l'intérieur de l'élément de connecteur avec un résidu de colle est ainsi pratiquement éliminé.

L'extrémité arrière 10 du support de ferrule se prolonge par une enclume 15 qui sert en même temps de structure de soutien de la paroi du corps autour de l'encoche.

On remarque que l'enclume 15 est crénelée et reproduit les créneaux présents sur la paroi externe de la portion cylindrique 12 du corps.

De tels créneaux servent à maintenir les éléments de renfort d'un câble optique (non représenté), directement sur le corps 1 grâce à un manchon de sertissage 16, entourant la portion cylindrique 12 du corps ainsi que l'enclume 15, le manchon étant destinée à être écrasé par sertissage depuis l'extérieur.

Le corps 1 est muni sur sa surface extérieure d'éléments de verrouillage 30 aptes à coopérer avec un élément de connecteur complémentaire (non représenté). Ainsi, la rétention directe du câble sur le corps 1 permet d'éviter que les tractions exercées par le câble ne se répercutent sur le support de ferrule 2 et sur la ferrule elle-même.

On comprend que la grande surface de rétention offerte par la portion crénelée 12 du corps, prolongée par la paroi externe crénelée de l'enclume 15, permet de retenir très efficacement les éléments de renfort du câble.

Le manchon de sertissage 16 entoure la partie cylindrique 12 du corps et se prolonge au-delà de ce dernier par un tronçon 17 de diamètre réduit, notamment intérieurement, pourvu d'une collerette 18 prévue pour retenir un manchon de soutien de câble (non représenté sur cette figure) qui sera décrit ultérieurement.

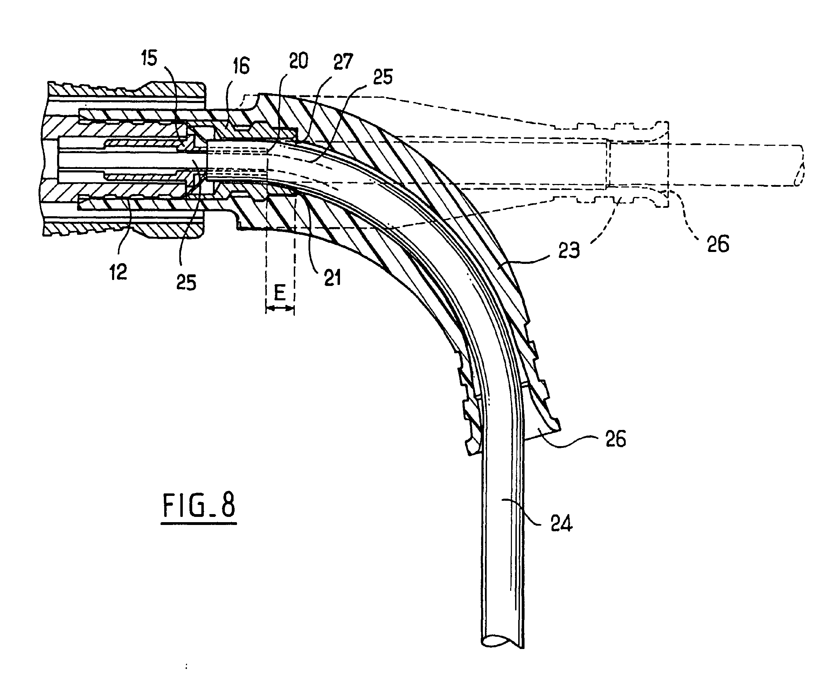

Dans cette partie du manchon de sertissage, l'enclume 15 comporte aussi un tronçon 19 de diamètre réduit qui est prévue pour s'engager sous la gaine du câble optique et servir d'enclume au manchon de sertissage pour pincer ladite gaine, comme on le voit sur la figure 8.

Ce pincement est d'autant plus efficace que les deux pièces métalliques en regard, à savoir le tronçon 19 de l'enclume et le tronçon 17 du manchon de sertissage, ne peuvent pas glisser l'une par rapport à l'autre, le manchon de sertissage étant serti sur l'enclume.

L'opération de sertissage se produit simultanément sur la gaine et sur les éléments de renfort.

On remarque que l'extrémité arrière 20 de l'enclume se trouve en retrait par rapport à l'extrémité arrière 21 du manchon de sertissage. Cette disposition a pour but de permettre à la fibre optique, sortant du support de ferrule et de l'enclume, de se courber sans se plier pour s'aligner avec le câble optique si ce dernier vient à être désaxé du fait d'une traction exercée sur le câble transversalement à l'axe de l'élément de connecteur.

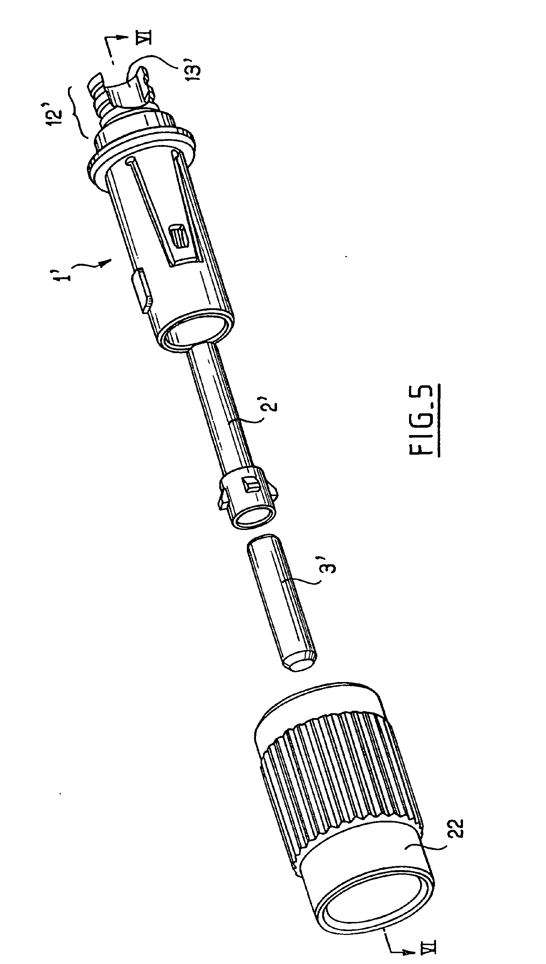

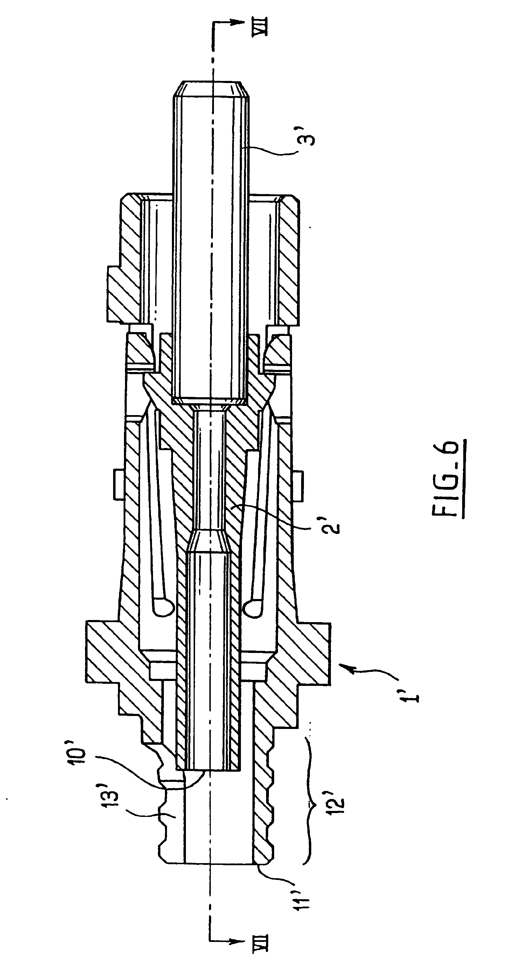

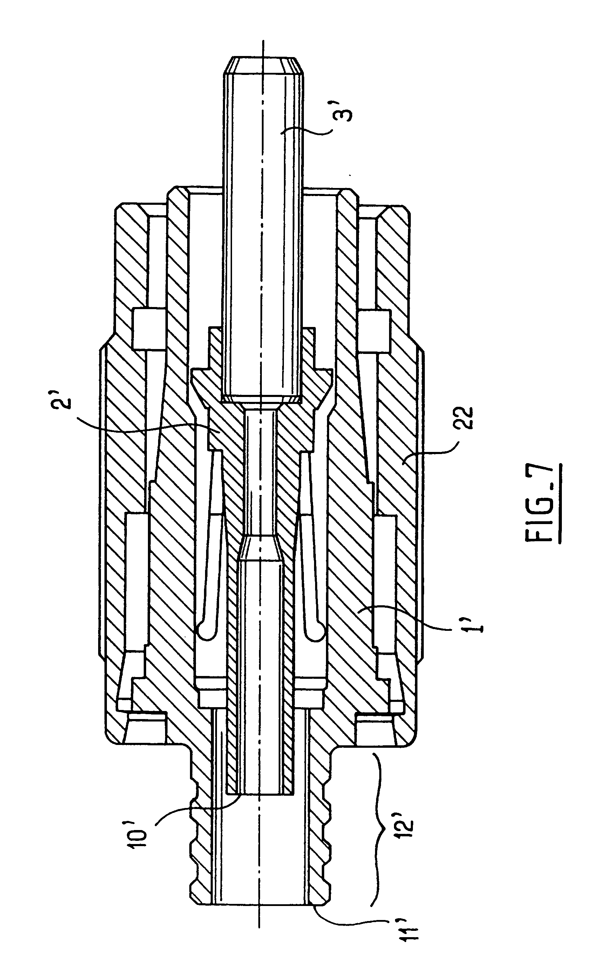

Les figures 5 à 7 fournissent un exemple d'élément de connecteur de type FC dont le corps comporte une encoche, comme précédemment décrit, pour faciliter l'extraction d'une seringue par échappement latéral.

Sur ces figures, les parties correspondant aux parties déjà décrites en référence aux figures 1 à 4 sont référencées par le même numéro, affecté du signe.

Comme cela est connu, l'élément de connecteur comporte un corps 1', un support de ferrule 2', une ferrule 3' et un bouchon de vissage 22 permettant le maintien de l'élément de connecteur accouplé avec un élément de connecteur complémentaire.

L'agencement de la portion crénelée 12' de l'encoche 13' et du manchon de sertissage quasiment identiques à ceux du mode de réalisation des figures 1 à 4, montre que l'encoche selon l'invention peut être prévue sur un élément de connecteur de tout type.

D'une manière générale, la présente invention s'applique à tous types d'éléments de connecteurs optiques, y compris ceux dont l'intérieur n'est pas rigoureusement identique à ceux décrits précédemment. Par exemple, la ferrule et son support pourraient être constitués par une seule et même pièce.

Sur la figure 8, on a représenté l'extrémité arrière de l'élément de connecteur des figures 1 à 4, muni de son manchon de soutien de câble 23 qui est engagé sur le manchon de sertissage 16 serti sur la paroi extérieure crénelée 12 du corps de l'élément de connecteur. Le manchon de soutien de câble 23 est représenté en traits interrompus dans sa position de repos, qu'il occupe lorsque le câble 24 sortant de l'élément de connecteur ne subit aucune contrainte, et en traits forts dans une position recourbée, dans laquelle le câble est tiré perpendiculairement à l'axe de l'élément de connecteur.

Cette figure permet de bien comprendre comment la distance E qui sépare les extrémités arrière 20,21 de l'enclume 15 et du manchon de sertissage 16 et l'embouchure évasée 27 du manchon de sertissage offrent au câble optique de se courber sans se plier, entre la sortie de l'enclume et l'extrémité 21 du manchon de sertissage pour sortir de l'élément de connecteur dans l'alignement du manchon de soutien de câble.

En particulier, on voit que lorsque le câble subit une traction perpendiculairement à l'axe de l'élément de connecteur, le manchon de soutien de câble 23 remplit son rôle en empêchant le câble de se plier mais, du fait de ses déformations, exerce une force de cisaillement sur le câble à la sortie 21 du manchon de sertissage 16.

Grâce au décalage axial E et à l'embouchure 27 qui laisse un débattement radial au câble, cette force de cisaillement ne se traduit sur le câble optique que par une courbure régulière, de sorte que le câble optique peut quitter l'enclume 15 dans l'axe de cette dernière et se courber progressivement sans pliure jusqu'à atteindre la sortie 21 du manchon de sertissage où le câble n'est plus dans l'axe de l'élément de connecteur mais suit la courbure du manchon de soutien de câble.

A son extrémité libre, le manchon de soutien de câble 23 comporte une embouchure évasée 26 qui a pour objet de soutenir le câble à la sortie dudit manchon, lorsqu'il subit une traction perpendiculaire à l'axe de l'élément de connecteur trop faible pour entraîner le fléchissement du manchon de soutien. Dans un tel cas, le manchon demeure dans sa position de repos représentée en traits interrompus et le câble sort de ce manchon en s'appuyant sur son embouchure évasée, ce qui préserve la fibre optique en maintenant son rayon de courbure au-dessus de son seuil acceptable.

Il est bien entendu que les modes de réalisation qui viennent d'être décrits ne présentent aucun caractère limitatif et qu'ils pourront recevoir toute modification désirable sans sortir pour cela du cadre de l'invention tel que défini par les revendications.

## Revendications

1. Elément de connecteur pour fibre optique, comportant :
- une ferrule (3, 3') destinée à maintenir une portion d'extrémité dénudée d'une fibre optique,
- un support de ferrule (2, 2') allongé ayant une extrémité avant apte à supporter la ferrule, une extrémité arrière (10, 10') opposée à l'extrémité avant et un canal s'étendant de l'extrémité arrière (10, 10') à l'extrémité avant et par lequel la partie gainée (24) de la fibre optique peut traverser ledit support (2, 2') pour engager la portion d'extrémité dénudée de la fibre dans la ferrule (3, 3'),
- un corps (1, 1') recevant intérieurement la ferrule (3, 3') et son support (2, 2'), ledit corps ayant une extrémité avant pour la connexion de l'élément de connecteur à un autre élément de connecteur et une extrémité arrière (11, 11') par laquelle la fibre optique pénètre pour s'engager dans le support de ferrule puis dans la ferrule, cette extrémité arrière (11, 11') s'étendant au-delà de l'extrémité arrière (10, 10') du support de ferrule, à l'état monté de l'élément de connecteur, le corps (1, 1') comportant, à sa partie arrière, une portion cylindrique (12, 12') autour de laquelle peut s'engager un manchon de sertissage (16), **caractérisé par le fait que** le corps (1, 1') comporte, à sa partie arrière, une encoche (13, 13') s'étendant depuis l'extrémité arrière (11, 11') du corps pour dégager un accès radial au support de ferrule (2, 2'), l'encoche (13, 13') étant plus large que l'extrémité arrière (10, 10') du canal intérieur du support de ferrule et formant un angle d'ouverture permettant à un opérateur tenant une seringue engagée dans le support de ferrule (2,2,') de sortir cette seringue de l'élément de connecteur sans toucher le corps (1,1').

2. Elément de connecteur selon la revendication 1, **caractérisé par le fait que** l'encoche (13, 13') présente sensiblement la forme d'un U, et que chaque branche (14) du U de l'encoche (13, 13') est découpée dans l'épaisseur de la paroi du corps suivant un plan et que les deux plans correspondant chacun à une branche du U forment entre eux un angle 6 d'environ 20 degrés et offrent un angle d'ouverture α par rapport à l'axe du corps d'environ 40 degrés.

3. Elément de connecteur selon l'une quelconque des revendications 1 et 2,
**caractérisé par le fait qu'**il comporte en outre une structure de renfort de l'extrémité arrière du corps, sous la forme d'une pièce (15) conformée pour s'emmancher dans ledit corps par son extrémité arrière de manière à soutenir la paroi dudit corps autour de l'encoche.

4. Elément de connecteur selon l'une quelconque des revendications 1 à 3,
**caractérisé par le fait que** la portion arrière cylindrique (12, 12') et le manchon de sertissage (16) constituent des moyens d'arrimage pour arrimer les éléments de renfort d'un câble optique incluant la fibre optique au corps de l'élément de connecteur de manière à soustraire la ferrule et son support à toute traction exercée sur le câble optique.

5. Elément de connecteur selon la revendication 4, **caractérisé par le fait que** les moyens d'arrimage arriment aussi la gaine extérieure du câble optique au corps de l'élément de connecteur de manière à soustraire la ferrule et son support à toute traction exercée sur le câble optique.

6. Elément de connecteur selon l'une quelconque des revendications précédentes, **caractérisé par le fait que** la paroi externe de ladite portion cylindrique (12, 12') de la partie arrière de l'élément de connecteur est crénelée.

7. Elément de connecteur selon l'une quelconque des revendications 4 à 6,
**caractérisé par le fait que** les moyens d'arrimage comprennent une enclume (15) et le manchon de sertissage (16), l'enclume étant une pièce de révolution engagée autour de la fibre optique dénudée, pénétrant sous la gaine du câble et autour de laquelle les éléments de renfort se répartissent, le manchon étant prévu pour subir une déformation plastique par écrasement, en emprisonnant les éléments de renfort et éventuellement de la gaine autour de l'enclume.

8. Elément de connecteur selon la revendication 3 et l'une quelconque des revendications 4 à 7, **caractérisé par le fait que** la structure de renfort et l'enclume sont une seule et même pièce (15) .

9. Elément de connecteur selon la revendication 8, **caractérisé par le fait que** l'enclume (15) prolonge la paroi extérieure (12) du corps de l'élément de connecteur vers l'arrière et qu'elle comporte un tronçon arrière (19) de plus petit diamètre prévu pour s'engager sous la gaine du câble, le manchon de sertissage présentant intérieurement un rétrécissement de diamètre (17) correspondant.

10. Elément de connecteur selon l'une quelconque des revendications 7 à 9, **caractérisé par le fait que** ladite enclume (5) est crénelée.

11. Elément de connecteur selon l'une quelconque des revendications précédentes, **caractérisé par le fait qu'**il comporte un manchon de soutien de câble (23) élastiquement flexible destiné à guider le câble optique à sa sortie de l'élément de connecteur, à l'arrière de ce dernier.

12. Elément de connecteur selon la revendication 11, **caractérisé par le fait que** le manchon de soutien de câble (23) prend appui, à l'arrière de l'élément de connecteur, sur un écarteur cylindrique (16) à embouchure évasée (27), qui s'étend en arrière de l'élément de connecteur autour et au-delà de tout moyen d'arrimage (15, 16).

13. Elément de connecteur selon la revendication 11 ou 12, **caractérisé par le fait que** le manchon de soutien de câble est engagé sur le manchon de sertissage et que le manchon de sertissage (16) s'étend vers l'arrière du connecteur au-delà de l'enclume (15) où il comporte une embouchure évasée (27) offrant un débattement radial au câble optique, de façon que le manchon de soutien de câble, lorsqu'il subit une flexion et désaxe le câble optique par rapport à l'élément de connecteur, s'appuie sur le manchon de sertissage (16), et que la distance (E) entre l'extrémité arrière (20) de l'enclume et l'extrémité arrière (21) du manchon de sertissage permette au câble optique, dont l'axe est confondu avec celui de l'élément de connecteur à la sortie arrière de l'enclume, de se courber progressivement pour se retrouver dans l'axe du manchon de soutien de câble à la sortie du manchon de sertissage.

14. Elément de connecteur selon l'une quelconque des revendications 11 et 13,
**caractérisé par le fait qu'**il comporte, à l'extrémité de son manchon de soutien de câble (23) opposée au corps de l'élément de connecteur, une embouchure évasée (26) permettant au câble optique sortant dudit manchon de sortie de prendre une courbure compatible avec le rayon de courbure minimal de la fibre optique.

15. Procédé de mise en place d'un élément de connecteur à l'extrémité d'une fibre optique, l'élément de connecteur comportant :
- une ferrule (3, 3') comportant un canal central et destinée à maintenir une portion d'extrémité dénudée d'une fibre optique,
- un support de ferrule (2, 2') allongé ayant une extrémité avant apte à supporter la ferrule, une extrémité arrière (10, 10') opposée à l'extrémité avant et un canal s'étendant de l'extrémité arrière (10, 10') à l'extrémité avant et par lequel la partie gainée (24) de la fibre optique peut traverser ledit support (2, 2') pour engager la portion d'extrémité dénudée de la fibre dans la ferrule (3, 3'),
- un corps (1, 1') recevant intérieurement la ferrule (3, 3') et son support (2, 2'), ledit corps ayant une extrémité avant pour la connexion de l'élément de connecteur à un autre élément de connecteur et une extrémité arrière (11, 11') par laquelle la fibre optique pénètre pour s'engager dans le support de ferrule puis dans la ferrule, cette extrémité arrière (11, 11') s'étendant au-delà de l'extrémité arrière (10, 10') du support de ferrule, à l'état monté de l'élément de connecteur, le corps (1, 1') comportant, à sa partie arrière, une encoche (13, 13') dégageant un accès radial au support de ferrule (2, 2'), l'encoche étant plus large que l'extrémité arrière (10,10') du canal intérieur du support de ferrule (2,2'), le procédé comportant les étapes suivantes :
a) introduction d'une seringue dans l'élément de connecteur, par son extrémité arrière, jusqu'à l'embouchure du canal central de la ferrule;
b) dépôt d'une goutte de colle, au moyen de la seringue, à l'embouchure du canal central de la ferrule (3, 3');
c) extraction de la seringue de l'élément de connecteur sans souiller l'intérieur dudit élément de connecteur, alors qu'une bulle de colle fait saillie à l'extrémité de la seringue,
procédé dans lequel, à l'étape c), on sort la seringue en la maintenant en appui contre la paroi intérieure du support de ferrule (2,2') en direction de l'encoche (13,13') de manière à ce que, lorsque l'extrémité de la seringue arrive à l'embouchure (10,10') du support de ferrule (2,2'), elle s'en échappe et sort immédiatement du corps (1,1') en traversant l'encoche (13,13') sans toucher la paroi du corps.

16. Procédé selon la revendication précédente, dans lequel l'élément de connecteur est conforme à l'une quelconque des revendications 1 à 14.

## Claims

1. A connector element for optical fiber, said connector element comprising:
a ferrule (3, 3') serving to hold a stripped end portion of an optical fiber;
an elongate ferrule support (2, 2') having a front end suitable for supporting the ferrule, a rear end (10, 10') opposite from the front end, and a channel extending from the rear end (10, 10') to the front end and via which the non-stripped portion (24) of the optical fiber can pass through said support (2, 2') so that the stripped end portion of the fiber can be engaged in the ferrule (3, 3'); and
a body (1, 1') inside which the ferrule (3, 3') and its support (2, 2') are received, said body having a front end for connecting the connector element to another connector element, and a rear end (11, 11') via which the optical fiber penetrates for the purpose of engaging in the ferrule support and then in the ferrule, said rear end (11, 11') extending beyond the rear end (10, 10') of the ferrule support, when the connector is in the assembled state, the body (1,1') comprising at its rear part a cylindrical portion (12, 12') around which a crimp sleeve (16) engages, **characterized by** the fact that, in its rear portion, the body (1, 1') is provided with a notch (13, 13') extending from the rear end (11, 11') of the body so as to provide unobstructed radial access to the ferrule support (2, 2'), the notch (13, 13') being wider than the rear end (10, 10') of the channel inside the ferrule support and forming an angle of aperture enabling an operator holding a syringe introduced in the ferrule support (2, 2') to withdraw this syringe from the connector element without touching the body (1, 1').

2. A connector element according to claim 1,
**characterized by** the fact that the notch (13, 13') is substantially U-shaped, and that each branch (14) of the U-shape of the notch (13, 13') is cut out in the thickness of the wall of the body in a respective plane, and that the two planes corresponding to respective ones of the branches of the U-shape form an angle θ between them of about 20° and offer an opening that subtends an angle α of about 40° on the axis of the body.

3. A connector element according to any one of claims 1 and 2, **characterized by** the fact that it further includes a structure for reinforcing the rear end of the body, in the form of a piece (15) shaped to fit into said body via the rear end thereof so as to support the wall of said body around the notch.

4. A connector element according to any one of claims 1 to 3, **characterized by** the fact that the cylindrical rear portion (12, 12') and the crimp sleeve (16) constitute securing means for securing the strength members of an optical cable including the optical fiber to the connector element so as to prevent the ferrule and its support from being subjected to any traction that is exerted on the optical cable.

5. A connector element according to claim 4,
**characterized by** the fact that the securing means also secure the outer covering of the optical cable to the body of the connector element so as to prevent the ferrule and its support from being subjected to any traction that is exerted on the optical cable.

6. A connector element according to any preceding claim, **characterized by** the fact that the outside wall of said cylindrical portion (12, 12') of the rear portion of the connector element is crenelated.

7. A connector element according to any one of claims 4 to 6, **characterized by** the fact that the securing means include an anvil (15) and the crimp sleeve (16), the anvil being a circularly-symmetrical piece engaged around the stripped optical fiber, penetrating under the covering of the cable and around which the strength members are distributed, the sleeve being organized to undergo plastic deformation by being crushed, thereby holding captive the strength members and optionally the covering around the anvil.

8. A connector element according to claim 3 and to any one of claims 4 to 7, **characterized by** the fact that the reinforcing structure and the anvil are constituted by a single piece (15).

9. A connector element according to claim 8,
**characterized by** the facts that the anvil (15) extends the outside wall (12) of the body of the connector element rearwards, and that it is provided with a rear segment (19) of smaller diameter organized to engage under the covering of the cable, the inside of the crimp sleeve being provided with a constriction of corresponding diameter (17).

10. A connector element according to any one of claims 7 to 9, **characterized by** the fact that said anvil (5) is crenelated.

11. A connector element according to any preceding claim, **characterized by** the fact that it is provided with a cable support sleeve (23) that is resiliently flexible and that serves to guide the optical cable as it leads out from the connector element at the rear thereof.

12. A connector element according to claim 11,
**characterized by** the fact that, at the rear of the connector element, the cable support sleeve (23) bears against a cylindrical spreader (16) having a flared mouth (27) and that extends to the rear of the connector element around and beyond any securing means (15, 16).

13. A connector element according to claims 11 or 12, **characterized by** the facts that the cable support sleeve is engaged on the crimp sleeve, and that the crimp sleeve (16) extends towards the rear of the connector beyond the anvil (15) where it is provided with a flared mouth (27) offering radial clearance to the optical cable so that when the cable support sleeve is subjected to bending and moves the optical cable off axis relative to the connector element, said cable support sleeve bears against the crimp sleeve (16), and so that the distance (E) between the rear end (20) of the anvil and the rear end (21) of the crimp sleeve makes it possible for the optical cable, whose axis coincides with the axis of the connector element at the rear outlet of the anvil, to bend progressively so as to lie on the axis of the cable support sleeve at the outlet of the crimp sleeve.

14. A connector element according to anyone of claims 11 and 13, **characterized by** the fact that, at that end of its cable support sleeve (23) which is opposite from the body of the connector element, said connector element is provided with a flared mouth (26) enabling the optical cable leading out from said outlet sleeve to take up a curvature compatible with the minimum radius of curvature of the optical fiber.

15. A method for putting in place a connector element at the end of an optical fiber, the connector element comprising:
- a ferrule (3, 3') comprising a central channel and suitable for maintaining a stripped end portion of an optical fiber,
- an elongated ferrule rapport (2, 2') having a front end suitable for supporting the ferrule, a rear end (10, 10') opposite from the front end, and a channel extending from the rear end (10, 10') to the front end and via which the non stripped portion (24) of the optical fiber can pass through said support (2, 2') so that the stripped end portion of the fiber can be engaged in the ferrule (3, 3')
- a body (1, 1') inside which the ferrule (3, 3') and its support (2, 2') are received, said body having a front end for connecting the connector element to another connector element, and a rear end (11, 11') via which the optical fiber penetrates for the purpose of engaging in the ferrule support, said rear end (11, 11') extending beyond the rear end (10, 10') of the ferrule support, when the connector is in the assembled state, the body (1, 1') comprising, at its rear end, a notch (13, 13') providing an unobstructed radial access to the ferrule support (2, 2'), the notch being wider than the rear end (10, 10') of the inner channel of the ferrule support (2, 2'), the method comprising the steps of:
a) introducing a syringe in the connector element, by its rear end, till the mouth of the central channel of the ferrule;
b) depositing a drop of glue, by means of the syringe, at the mouth of the central channel of the ferrule (3, 3');
c) extracting the syringe from the connector element without soiling the inside of said connector element, whereas a bubble of glue projects from the end of the syringe,
method in which at step c) the syringe is extracted while being maintained against the internal wall of the ferrule support (2, 2') towards the notch (13, 13') so that when the end of the syringe reaches the mouth (10, 10') of the ferrule support (2, 2') it escapes therefrom and gets immediately out of the body (1, 1') through the notch (13, 13') without touching the wall of the body.

16. A method according to the preceding claim, wherein the connector element corresponds to any one of claims 1 to 14.

## Patentansprüche

1. Verbinderelement für optische Fasern, mit:
- einer Hülse (3, 3'), die dazu bestimmt ist, einen abisolierten Abschnitt einer optischen Faser zu halten,
- einem länglichen Hülsenträger (2, 2'), mit einem vorderen Ende, das zum Halten der Hülse ausgebildet ist, einem dem vorderen Ende entgegengesetzten hinteren Ende (10, 10') und einem Kanal, der sich vom hinteren Ende (10, 10') zum vorderen Ende erstreckt und in dem der umhüllte Teil (24) der optischen Faser den genannten Hülsenträger (2, 2') durchqueren kann, um den abisolierten Endabschnitt der Faser in die Hülse (3, 3') einzuführen,
- einem Körper (1, 1') der im Inneren die Hülse (3, 3') und ihren Träger (2, 2') aufnimmt, mit einem vorderen Ende zum Verbinden des Verbinderelements mit einem anderen Verbinderelement, und einem hinteren Ende (11, 11'), durch welches die optische Faser hindurchgeht, um in den Hülsenträger und dann in die Hülse einzutreten, wobei dieses hintere Ende (11, 11') im montierten Zustand des Verbinderelements über das hintere Ende (10, 10') des Hülsenträgers hinaus ragt, wobei der Körper (1, 1') in seinem hinteren Teil einen zylindrischen Abschnitt (12, 12') aufweist, der von einer Quetschmanschette (16) umschlossen werden kann,
**dadurch gekennzeichnet, daß** der Körper (1, 1') in seinem hinteren Teil eine Aussparung (13, 13') aufweist, die vom hinteren Ende (11) des Körpers ausgeht, um einen radialen Zugang zu dem Hülsenträger (2, 2') freizugeben, wobei die Aussparung (13, 13') weiter ist als das hintere Ende (10, 10') des Kanals im Inneren des Hülsenträgers und einen Öffnungswinkel bildet, der es einem Monteur, der eine in den Hülsenträger (2, 2') eingeführte Spritze hält, ermöglicht, diese Spritze aus dem Verbinderelement herauszuziehen, ohne den Körper (1, 1') zu berühren.

2. Verbinderelement nach Anspruch 1, **dadurch gekennzeichnet, daß** die Aussparung (13, 13') im wesentlichen U-förmig ist und daß jeder Schenkel (14) des U der Aussparung (13, 13') längs einer Ebene aus der Dicke der Wand des Körpers ausgeschnitten ist und daß die beiden Ebenen, die jeweils einem Schenkel des U entsprechen, miteinander einen Winkel θ von etwa 20° bilden und in Bezug auf die Achse des Körpers einen Öffnungswinkel a von etwa 40° bilden.

3. Verbinderelement nach Anspruch 1 oder 2, **dadurch gekennzeichnet, daß** es außerdem eine Verstärkungsstruktur für das hintere Ende des Körpers aufweist, in der Form eines Teils (15), das so ausgebildet ist, daß es mit seinem hinteren Ende so in den Körper eingepreßt werden kann, daß es die Wand des genannten Körpers um die Aussparung herum unterstützt.

4. Verbinderelement nach einem der Ansprüche 1 bis 3, **dadurch gekennzeichnet, daß** der hintere zylindrische Teil (12, 12') und die Quetschmanschette (16) Sicherungsmittel bilden, die die Verstärkungselemente eines optischen Kabels einschließlich der optischen Faser so am Körper des Verbinderelements sichern, daß die Hülse und ihr Träger von jeglichem auf das Kabel ausgeübten Zug entlastet werden.

5. Verbinderelement nach Anspruch 4, **dadurch gekennzeichnet, daß** die Sicherungsmittel auch die äußere Hülle des optischen Kabels so an dem Körper des Verbinderelements sichern, daß die Hülse und ihr Träger von jeglichem auf das optische Kabel ausgeübten Zug entlastet werden.

6. Verbinderelement nach einem der vorstehenden Ansprüche, **dadurch gekennzeichnet, daß** die äußere Wand des genannten zylindrischen Teils (12, 12') des hinteren Abschnitts des Verbinderelements verrippt ist.

7. Verbinderelement nach einem der Ansprüche 4 bis 6, **dadurch gekennzeichnet, daß** die Sicherungsmittel ein Widerlager (15) und die Quetschhülse (16) umfassen, wobei das Widerlager ein Rotationskörper ist, der um die abisolierte optische Faser herum anliegt und unter die Hülle des Kabels dringt und um den herum sich die Verstärkungselemente verteilen, wobei die Manschette dazu vorgesehen ist, durch Stauchung eine plastische Deformation zu erfahren und dabei die Verstärkungselemente und gegebenenfalls die Hülle um das Widerlager herum zu klemmen.

8. Verbinderelement nach Anspruch 3 und einem der Ansprüche 4 bis 7. **dadurch gekennzeichnet, daß** die Verstärkungsstruktur und das Widerlager ein einziges Stück (15) bilden.

9. Verbinderelement nach Anspruch 8, **dadurch gekennzeichnet, daß** das Widerlager (15) die äußere Wand (12) des Körpers des Verbinderelements nach hinten verlängert und einen hinteren Abschnitt (19) mit kleinerem Durchmesser aufweist, der dazu vorgesehen, in die Hülle des Kabels einzugreifen, wobei die Quetschmanschette im Inneren eine Engstelle (17) mit entsprechendem Durchmesser aufweist.

10. Verbinderelement nach einem der Ansprüche 7 bis 9, **dadurch gekennzeichnet, daß** das Widerlager (5) verrippt ist.

11. Verbinderelement nach einem der vorstehenden Ansprüche, **dadurch gekennzeichnet, daß** es eine elastisch nachgiebige Führungstülle (23) aufweist, die dazu bestimmt ist, das optische Kabel bei seinem Austritt aus dem Verbinderelement hinter demselben zu führen.

12. Verbinderelement nach Anspruch 11, **dadurch gekennzeichnet, daß** die Führungstülle (23) hinter dem Verbinderelement an einem zylindrischen Abstandshalter (16) mit erweitertem Mundstück (27) anliegt, das sich hinter dem Verbinderelement um alle Sicherungsmittel (15, 16) herum und darüber hinaus erstreckt.

13. Verbinderelement nach Anspruch 11 oder 12, **dadurch gekennzeichnet, daß** die Führungstülle für das Kabel auf die Quetschmanschette aufgeschoben ist und daß die Quetschmanschette (16) sich zur Rückseite des Verbinders über das Widerlager (15) hinaus erstreckt, wo sie ein erweitertes Mundstück (27) aufweist, das einen radialen Anschlag für das optische Kabel bildet, derart, daß die Führungstülle für das Kabel, wenn sie eine Biegung erfährt und das optische Kabel seitwärts in Bezug auf das Verbinderelement auslenkt, sich auf der Quetschmanschette (16) abstützt, und daß der Abstand (E) zwischen dem hinteren Ende (20) des Widerlagers und dem hinteren Ende (21) der Quetschmanschette es dem optischen Kabel, dessen Achse mit derjenigen des Verbinderelements am hinteren Ausgang des Widerlagers zusammenfällt, erlaubt, sich progressiv zu krümmen, um sich am Ausgang der Quetschmanschette auf die Achse der Führungstülle zu zentrieren.

14. Verbinderelement nach Anspruch 11 oder 13, **dadurch gekennzeichnet, daß** es am Ende seiner Führungstülle (23), das dem Körper des Verbinderelements entgegengesetzt ist, eine erweiterte Mündung (26) aufweist, die es dem aus der genannten Führungstülle austretenden optischen Kabel erlaubt, eine Krümmung anzunehmen, die mit dem kleinstmöglichen Krümmungsradius der optischen Faser kompatibel ist.

15. Verfahren zur Montage eines Verbinderelements am Ende einer optischen Faser, wobei das Verbinderelement aufweist:
- eine Hülse (3, 3'), die dazu bestimmt ist, einen abisolierten Abschnitt einer optischen Faser zu halten,
- einen länglichen Hülsenträger (2, 2'), mit einem vorderen Ende, das zum Halten der Hülse ausgebildet ist, einem dem vorderen Ende entgegengesetzten hinteren Ende (10, 10') und einem Kanal, der sich vom hinteren Ende (10, 10') zum vorderen Ende erstreckt und in dem der umhüllte Teil (24) der optischen Faser den genannten Hülsenträger (2, 2') durchqueren kann, um den abisolierten Endabschnitt der Faser in die Hülse (3, 3') einzuführen,
- einen Körper (1, 1') der im Inneren die Hülse (3, 3') und ihren Träger (2, 2') aufnimmt, mit einem vorderen Ende zum Verbinden des Verbinderelements mit einem anderen Verbinderelement, und einem hinteren Ende (11, 11'), durch welches die optische Faser hindurchgeht, um in den Hülsenträger und dann in die Hülse einzutreten, wobei dieses hintere Ende (11, 11') im montierten Zustand des Verbinderelements über das hintere Ende (10, 10') des Hülsenträgers hinaus ragt, wobei der Körper (1, 1') in seinem hinteren Teil eine Aussparung (13, 13') aufweist, die einen radialen Zugang zu dem Hülsenträger (2, 2') freigibt, wobei die Aussparung weiter ist als das hintere Ende (10. 10') des Kanals im Inneren des Hülsenträgers,
welches Verfahren die folgenden Schritte umfaßt:
a) Einführen einer Spritze in das Verbinderelement, vom hinteren Ende her, bis zur Mündung des zentralen Kanals der Hülse;
b) Abgeben eines Tropfens Klebstoff mit Hilfe der Spritze in die Mündung des zentralen Kanals der Hülse (3, 3');
c) Zurückziehen der Spritze aus dem Verbinderelement, ohne das Innere des genannten Verbinderelements zu verschmutzen, wenn eine Klebstoffperle aus dem Ende der Spritze herausragt,
bei welchem Verfahren in Schritt c) die Spritze herausgezogen wird, während sie in Richtung der Aussparung (13, 13') mit der inneren Wand des Hülsenträgers (2, 2') in Anlage gehalten wird, so daß, wenn das Ende der Spritze die Mündung (10, 10') des Hülsenträgers (2, 2') erreicht, sie daraus austritt und den Körper (1, 1') unmittelbar durch die Aussparung (13, 13') hindurch verläßt, ohne die Wand des Körpers zu berühren.

16. Verfahren nach dem vorstehenden Anspruch, bei dem das Verbinderelement nach irgendeinem der Ansprüche 1 bis 14 ausgebildet ist.
